(19) Europäisches Patentamt / European Patent Office / Office européen des brevets

(11) **EP 3 382 962 A1**

(12) **EUROPEAN PATENT APPLICATION**

(43) Date of publication:
**03.10.2018 Bulletin 2018/40**

(51) Int Cl.:
*H04L 12/911* (2013.01)   *H04L 12/927* (2013.01)
*H04N 21/24* (2011.01)

(21) Application number: **17305376.0**

(22) Date of filing: **30.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **MONTALVO, Luis**
  **35576 Cesson-Sevigne (FR)**
• **BICHOT, Guillaume**
  **35576 Cesson-Sevigne (FR)**
• **GOUACHE, Stéphane**
  **35576 Cesson-Sevigne (FR)**

(74) Representative: **Vidon Brevets & Stratégie
16B, rue de Jouanet
BP 90333
35703 Rennes Cedex 7 (FR)**

(54) **METHOD FOR MANAGING ACTIVE FLOWS IN A COMMUNICATION NETWORK BY A NETWORK ELEMENT, AND CORRESPONDING NETWORK ELEMENT**

(57)     Network element (100) adapted to be connected to a communication network comprising a set of devices, said devices being configured to receive one set of available services,

wherein the network element is a bandwidth manager (160) configured to:
- obtain, for couples defined by a service of the set of services and a device of the set of devices, a bandwidth for each flow between the service and the device of said couples;
- obtain a priority for the flows to be delivered between the services and the devices of said couples;
- solve a 0-1 Knapsack problem by applying the obtained bandwiths and priorities and by considering an available downlink bandwidth associated with said communication network, to identify one or more allowable flows to be delivered between services of the set of services and devices of the set of devices;
- allow the identified one or more allowable flows to be delivered to the corresponding devices of said communication network.

FIG.2

EP 3 382 962 A1

**Description**

TECHNICAL FIELD

The present disclosure generally relates to the bandwidth and policy management, for instance in the context of a domestic or business network.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In a home network, multiple users can run diverse applications using different devices to access a given set of services. In one hand, the number of networked devices at home and the bandwidth demand steadily increase, and in the other hand, the bandwidth of the downlink to the home network has remained roughly constant. As a result, application performance in home networks has become highly unpredictable with many home users suffering from poor Quality of Experience.

There is then a need of a mechanism for managing bandwidth in a communication network, such as a home or business network, to enhance user experience.

SUMMARY

The disclosure concerns a method to be implemented at a network element adapted to be connected to a communication network comprising a set of devices, said devices being configured to receive one set of available services, wherein said method comprises:

- obtaining, for couples defined by a service of the set of services and a device of the set of devices, a bandwidth for each flow between the service and the device of said couples;
- obtaining a priority for the flows to be delivered between the services and the devices of said couples;
- solving a 0-1 Knapsack problem by applying the obtained bandwidths and priorities and by considering an available downlink bandwidth associated with said communication network, to identify one or more allowable flows to be delivered between services of the set of services and devices of the set of devices;
- allowing the identified one or more allowable flows to be delivered to the corresponding devices of said communication network.

In an embodiment of the present principles, a bandwidth for a flow associated with one of said couples can be obtained from a range of allowable bitrates for said flow between the service and the device of said couple.

In an embodiment of the present principles, the range of allowable bit-rates for said flow between the service and the device of said couple $(S_i, D_j)$ can be defined by the range [Max $(bs.min_i, bd.min_j)$; Min $(bs.max_i, bd.max_j)$], wherein:

- $[bs.min_i, bs.max_i]$ is the range of bitrates available from the service Si of said couple $(S_i, D_j)$
- $[bd.min_j, bd.max_j]$ is the range of bitrates supported by the device $D_j$ of said couple $(S_i, D_j)$.

In an embodiment of the present principles, the bandwidth for a flow associated with one of said couples, obtained from the range [Max $(bs.min_i, bd.min_j)$; Min $(bs.max_i, bd.max_j)$], can depend on a bandwidth manager policy associated with said communication network.

In an embodiment of the present principles, said bandwidth manager policy associated with said communication network can belong to the following group of policies comprising:

- priority to fairness;
- priority to quality;
- priority to user preferences.

In an embodiment of the present principles, allowing the identified one or more allowable flows can be performed periodically.

In an embodiment of the present principles, allowing the identified one or more allowable flows can be performed based on a network event.

In an embodiment of the present principles, said network event can belong to the following group of network events comprising:

- a change in the allowed flows;
- a change in the available downlink bandwidth associated with said communication network;
- a change in one or more priorities of the allowable flows by a user input.

In an embodiment of the present principles, a priority $p_{ij}$ for a flow between the service $S_i$ and the device $D_j$ of said couples can be defined by:

$$p_{ij} = \frac{(ps_i + pd_j)}{2}$$

where:

- $ps_i$ is the priority associated with the service $S_i$
- $pd_j$ is the priority associated with the device $D_j$.

In an embodiment of the present principles, a priority $p_{ij}$ for a flow between the service $S_i$ and the device $D_j$ of said couples can be defined by:

$$p_{ij} = C1 \times ps_i + C2 \times pd_j$$

where:

- $ps_i$ is the priority associated with the service $S_i$
- $pd_j$ is the priority associated with the device $D_j$
- C1 and C2 are two constants defined by $0 \leq C1, C2 \leq 1$ and $C1+C2 \leq 1$.

In an embodiment of the present principles, the priority $ps_i$ associated with the service $S_i$ can be defined by:

$$ps_i = \frac{\sum vs_{ik}}{K}$$

where:

- K is a number of features associated with the service $S_i$
- $vs_{ik}$ is a priority associated with the service Si for a feature k amongst the K features of the service $S_i$.

In an embodiment of the present principles, the priority $pd_j$ associated with the device $D_j$ can be defined by:

$$pd_j = \frac{\sum vdj_k}{K}$$

where:

- K is a number of attributes associated with the device $D_j$
- $vd_{jk}$ is a priority associated with the device $D_j$ for an attribute k amongst the K attributes of the device $D_j$.

In an embodiment of the present principles, the network element can be arranged in a gateway.
Besides, the present disclosure further concerns a network element adapted to be connected to a communication network comprising a set of devices, said devices being configured to receive one set of available services, wherein said network element comprises at least one memory and one or more processors configured to:

- obtain, for couples defined by a service of the set of services and a device of the set of devices, a bandwidth for each flow between the service and the device of said couples;
- obtain a priority for the flows to be delivered between the services and the devices of said couples;
- solve a 0-1 Knapsack problem by applying the obtained bandwidths and priorities and by considering an available downlink bandwidth associated with said communication network, to identify one or more allowable flows to be delivered between services of the set of services and devices of the set of devices;
- allow the identified one or more allowable flows to be delivered to the corresponding devices of said communication network.

Besides, the present disclosure further concerns a network element adapted to be connected to a communication network comprising a set of devices, said devices being configured to receive one set of available services, wherein the network element is a bandwidth manager configured to:

- obtain, for couples defined by a service of the set of services and a device of the set of devices, a bandwidth for each flow between the service and the device of said couples;
- obtain a priority for the flows to be delivered between the services and the devices of said couples;
- solve a 0-1 Knapsack problem by applying the obtained bandwidths and priorities and by considering an available downlink bandwidth associated with said communication network, to identify one or more allowable flows to be delivered between services of the set of services and devices of the set of devices;
- allow the identified one or more allowable flows to be delivered to the corresponding devices of said communication network.

In an embodiment of the present principles, a bandwidth for a flow associated with one of said couples can be obtained from a range of allowable bitrates for said flow between the service and the device of said couple.

In an embodiment of the present principles, the range of allowable bit-rates for said flow between the service and the device of said couple $(S_i, D_j)$ can be defined by the range [Max $(bs.min_i, bd.min_j)$; Min $(bs.max_i, bd.max_j)$], wherein:

- $[bs.min_i, bs.max_i]$ is the range of bitrates available from the service Si of said couple $(S_i, D_j)$
- $[bd.min_j, bd.max_j]$ is the range of bitrates supported by the device $D_j$ of said couple $(S_i, D_j)$.

In an embodiment of the present principles, the bandwidth for a flow associated with one of said couples, obtained from the range [Max $(bs.min_i, bd.min_j)$; Min $(bs.max_i, bd.max_j)$], can depend on a bandwidth manager policy associated with said communication network.

In an embodiment of the present principles, said bandwidth manager policy associated with said communication network can belong to the following group of policies comprising:

- priority to fairness;
- priority to quality;
- priority to user preferences.

In an embodiment of the present principles, the network element can be arranged in a gateway.

Besides, the present disclosure further concerns a non-transitory program storage device, readable by a computer, tangibly embodying a program of instructions executable by the computer to perform a method to be implemented at a network element adapted to be connected to a communication network comprising a set of devices, said devices being configured to receive one set of available services, wherein said method comprises:

- obtaining, for couples defined by a service of the set of services and a device of the set of devices, a bandwidth for each flow between the service and the device of said couples;
- obtaining a priority for the flows to be delivered between the services and the devices of said couples;
- solving a 0-1 Knapsack problem by applying the obtained bandwidths and priorities and by considering an available downlink bandwidth associated with said communication network, to identify one or more allowable flows to be delivered between services of the set of services and devices of the set of devices;
- allowing the identified one or more allowable flows to be delivered to the corresponding devices of said communication network.

The present disclosure also concerns a computer program product stored on a non-transitory computer readable medium and comprising program code instructions executable by a processor for implementing a method to be implemented at a network element adapted to be connected to a communication network comprising a set of devices, said devices being configured to receive one set of available services,
wherein said method comprises:

- obtaining, for couples defined by a service of the set of services and a device of the set of devices, a bandwidth for each flow between the service and the device of said couples;
- obtaining a priority for the flows to be delivered between the services and the devices of said couples;
- solving a 0-1 Knapsack problem by applying the obtained bandwidths and priorities and by considering an available downlink bandwidth associated with said communication network, to identify one or more allowable flows to be delivered between services of the set of services and devices of the set of devices;
- allowing the identified one or more allowable flows to be delivered to the corresponding devices of said communication network.

The method according to the disclosure may be implemented in software on a programmable device. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method aforementioned.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

BRIEF DESCRIPTION OF THE DRAWINGS

The disclosure will be better understood and illustrated by means of the following embodiment and execution examples, in no way limitative, with reference to the appended figures on which:

- Figure 1 is a schematic diagram of an example of a network environment adapted to implement some embodiments of the present principles;
- Figure 2 shows an example of a hardware configuration of a network element implementing the present principles;
- Figure 3 is a flow chart of an exemplary method for managing flows compliant with the present principles;
- Figure 4 graphically illustrates an example of mapping of a bandwidth management problem into the 0-1 Knapsack problem according to the present principles;
- Figure 5 shows a block diagram of a multi-tenant architecture illustrating the concept a Software Defined Multi-Tenant Network;
- Figure 6 shows a block diagram of a multi-tenant architecture of a Software Defined Multi-Tenant Network wherein a home network administrator has no access to a southbound API;
- Figure 7 shows a block diagram of a multi-tenant architecture of a Software Defined Multi-Tenant Network wherein a home network administrator does have access to a southbound API;
- Figures 8 and 9 show an example of implementation of the present principles on smart phone device in reference to the schematic diagram shown in Figure 6;
- Figure 10 shows an example of evolution of active flows in a home network from an initial priority status (on the left) to a final priority status (on the right) according to the present principles;

Wherever possible, the same reference numerals will be used throughout the figures to refer to the same or like parts.

DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes that may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

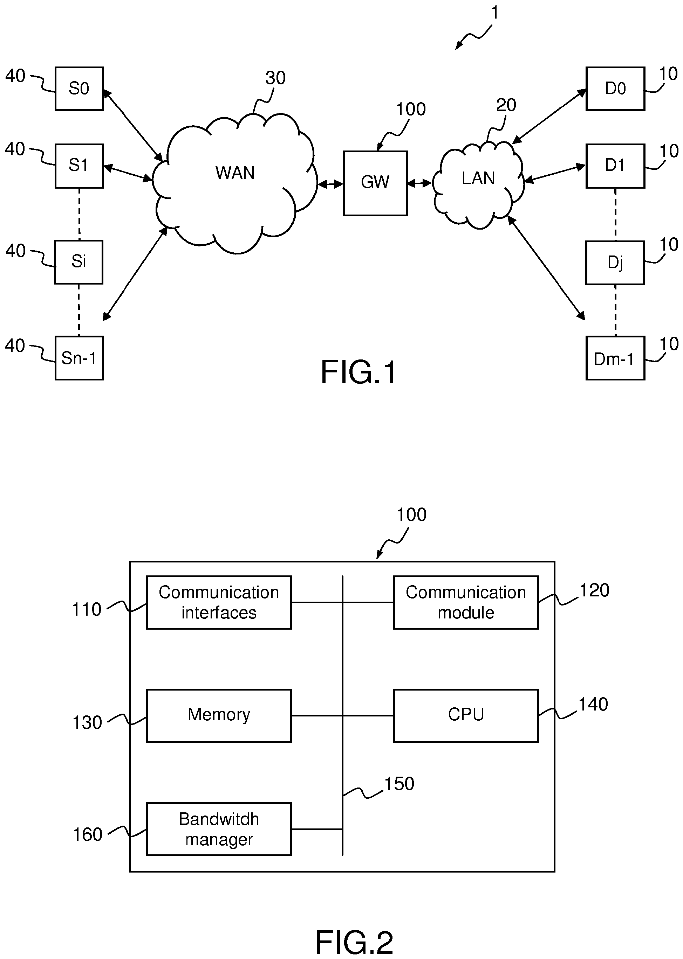

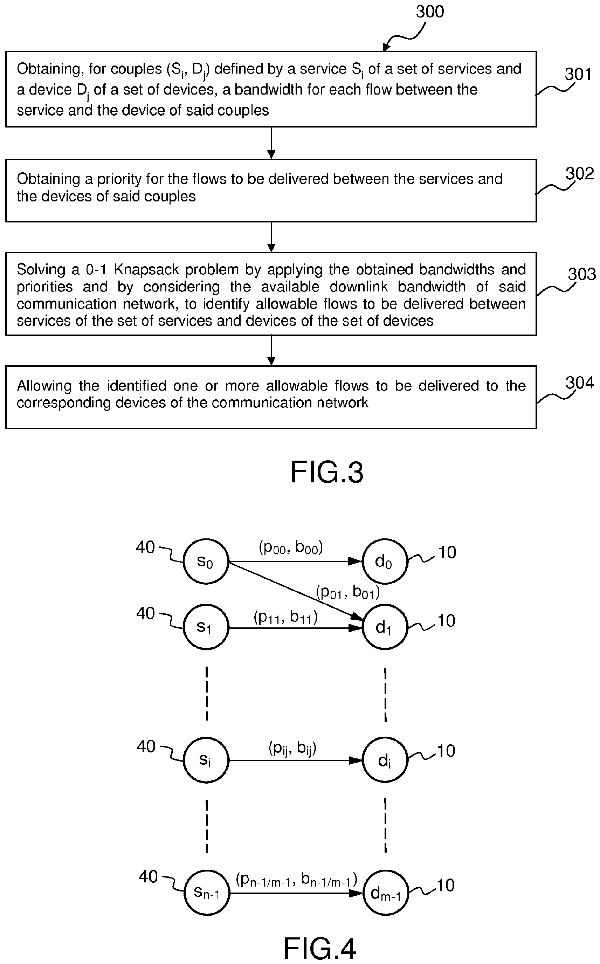

Figure 1 is a schematic diagram of an exemplary network infrastructure 1 wherein the present principles can be implemented. In particular, the network infrastructure 1 can comprise a network element 100 (such as a gateway or a bridge), one or more devices 10 and one or more servers 40 delivering one or more services Si, as further shown in Figure 4. The devices 10 (such as, a portable media device, a mobile phone, a tablet, a Set Top Box, a laptop, a TV set, etc.) are, for instance, in communication with the gateway 100 through a local area network LAN 20 (e.g., via cable or wireless technologies such WiFi). The gateway 100 can further be in communication with the remote servers 40 via a wide area network WAN 30 (such as Internet) (e.g.; via cable, optic fiber, xDSL, satellite, LTE, 3G/4G/5G technologies, etc.). It should be understood that further apparatuses (not shown) can be arranged between devices 10 and gateway 100 and between gateway 100 and remote servers 40.

As shown in Figure 2 depicting one non limitative example of a hardware configuration compliant with the present principles, the gateway 100 (which can be any type of broadband gateway such as cable, xDSL, fiber or wireless) comprises:

- one or more communication interfaces 110 (wired and/or wireless, as for example Wi-Fi, Ethernet, etc.) allowing one or several connections with LAN 20 and the WAN 30). Communication interfaces 110 can further comprise user input and/or output elements (e.g., a touch panel, a display screen, a keyboard, a remote control, etc.);
- a communication module 120 comprising the protocol stacks to communicate through the communication interfaces;
- a memory 130 which can represent both a volatile memory such as RAM, and a non-transitory memory such as a ROM, a hard drive or a flash memory, for processing and storing different files and information as necessary, including computer program products and software;
- a Central Processing Unit 140 (CPU) comprising one or more processors for executing the applications and/or programs stored in the gateway;
- an internal bus 150 to connect the various modules and processing means, routing and bridging means and all means well known to the skilled in the art (not shown) for performing the generic gateway functionalities.

The gateway can further comprise a bandwidth manager configured to determine a number of flows between the services Si delivered by the servers 40 and the devices 10 $D_j$, from the implementation of the method shown in Figure 3 compliant with the present principles. It should be understood that, in a variant compliant with the present principles, the bandwidth manager can be a standalone network element or can be arranged in another network element (for instance located in the WAN 30) distinct from the gateway.

In particular, as shown in Figure 3, the method 300 can comprise:

- obtaining (at step 301), for couples $(S_i, D_j)$ defined by a service $S_i$ of the set of services and a device $D_j$ of the set of devices, a bandwidth for each flow between the service and the device of said couples;
- obtaining (at step 302) a priority for the flows to be delivered between the services and the devices of said couples;
- solving (at step 303) a 0-1 Knapsack problem by applying the obtained bandwidths and priorities and by considering the available downlink bandwidth of said communication network, to identify one or more allowable flows to be delivered between services of the set of services and devices of the set of devices. The 0-1 Knapsack problem can be formulated as follows:

Maximize:

$$\sum \left( v_i \times z_i \right),$$

subject to:

$$\sum \left( w_i \times z_i \right) \leq W,$$

where $\{z_0 \ldots z_{n-1}\}$ is a set of n items where $z_i$ has a value $v_i$ and a weight $w_i$, with $z_i \in \{0,1\}$,
- allowing (at step 304) the identified one or more allowable flows to be delivered to the corresponding devices of said communication network 20.

Several algorithms are already known to solve the 0-1 Knapsack problem based on greedy, branch-and-bound, dynamic programming, or genetic approached as described, for instance, in the document *"Different approaches to solve the 0/1 knapsack problem"* from M.Hristakeva and D.Shrestha, in Proc. of 38th Midwest Instruction and Computing Symposium, Apr 2005, incorporated herein by reference.

In particular, the Dynamic Programming solution to the 0-1 Knapsack problem can be defined as follows:

- $\{w_1, w_2, \ldots, w_n, W\}$ is a set of strictly positive integers,
- for each $w \leq W$, let m [i, w] be the maximum value that can be attained, with weight less than or equal to w, using items up to i. m[i,w] can be defined recursively as follows:

$$m \left[ 0, w \right] = 0$$

$$m \left[ i, w \right] = m \left[ i - 1, w \right], \text{ if } w_i > w$$

$$m \left[ i, w \right] = max \left( m \left[ i - 1, w \right], m \left[ i - 1, w - w_i \right] + v_i \right), \text{ if } w_i \leq w$$

The solution is obtained by computing m[n,W]. The computation time as well as the memory requirements (complexity) of the solution is O(n*W).

An example of pseudo code for the Dynamic Programming solution to the 0-1 Knapsack Problem is shown herein after:

```
Data:
    v : array of values;
    w : array of weights;
    n : number of distinct items;
    W : knapsack capacity;
Result:
    m[n, W] : maximum value attainable with total weight ≤ W;

for w from 0 to W do
  | m[0, w] := 0;
end

for i from 1 to n do
  | for j from 0 to W do
  |   | if j ≥ w[i] then
  |   |   | m[i, j] := max(m[i-1, j], m[i-1, j-w[i]] + v[i]);
  |   | else
  |   |   | m[i, j] := m[i-1, j];
  |   | end
  | end
end
```

Algorithm of the Dynamic Programming solution

Thus, in an embodiment compliant with the present principles, the bandwidth manager 160, running on the gateway 100, can be configured to activate the maximum number of downlink flows, taking into account the set of flow priorities (for instance given by a user), knowing that the sum of the bandwidths of the activated downlink flows needs to be lower than the available downlink bandwidth B associated with the communication network 20.

According to the present principles, the one or more steps of the method 300 can be performed periodically (such as every 30 seconds) or based on a network event, such as:

- a change in the allowed flows (so called active flows). A change in the active flows can happen either because an active flow is finished or because a user in the LAN 20 requests to start an instance of an available service;
- a change in the available downlink bandwidth associated with the communication network 20;
- a change in one or more priorities of the allowable flows by a user input;
- etc.

It should also be noted that the periodicity of the allocation can, for instance, depend, among other factors, on the processing resources available at the gateway 100.

In the following, it is considered that:

- $S = \{S_0 \ldots S_{n-1}\}$ is a set of n services available in the LAN 20, at a given time t,
- $D = \{D_0 \ldots D_{m-1}\}$ is a set of m devices available in the LAN 20, at a given time t,
- $b_{ij}$ is the bandwidth required for a downlink flow between a service $S_i$ and a device $D_j$,
- the number of possible flows between the set of services S and the set of devices D, at time t, is n x m,
- $p_{ij}$ is the priority of the flow between a service $S_i$ and a device $D_j$ which can for instance be assigned by a user having a gateway management role or by an operator,
- $x_{ij}$ is a logical variable that is set to 1 when a flow between a service $S_i$ and a device $D_j$ is active and is set to 0 otherwise.

As above mentioned, the goal of the bandwidth manager 160 of the gateway 100 can be to activate the maximum number of downlink flows, taking into account the set of flow priorities (e.g. given by the user) and knowing that the sum of the bandwidths of the active flows needs to be lower than the available downlink bandwidth B. To that end, the bandwidth manager 160 needs to solve an optimization problem that can be mathematically defined as follows:

Maximize: $\sum_{i=0}^{n-1} \sum_{j=0}^{m-1} (p_{ij} \times x_{ij})$

subject to: $\sum_{i=0}^{n-1}\sum_{j=0}^{m-1}(b_{ij}\times x_{ij})\le B,$ where: $x_{ij}\in\{0,1\}$

This bandwidth management optimization problem can be considered as the 0-1 Knapsack optimization problem as above described, so that a solution to the 0-1 Knapsack problem can provide a solution to said bandwidth management optimization problem.

Figure 4 graphically illustrates the mapping of the bandwidth management problem into the 0-1 Knapsack problem. For sake of clarity, only some possible flows between a service $S_i$ and a device $D_j$ are shown.

To determine $p_{ij}$, it can further be considered that:

- $P_S = \{ps_0 ... ps_{n-1}\}$ is a set of n priorities assigned to the n services, wherein $ps_i \in \{0,1,...,100\}$ for example. Naturally, $ps_i$ can belong to another range of values,
- $P_D = \{pd_0 ... pd_{m-1}\}$ is a set of m priorities assigned to the m devices, wherein $pd_j \in \{0,1,..., 100\}$ in a numerical example. Naturally, $pd_j$ can belong to another range of numerical values.

According to the present principles, a priority $p_{ij}$ for a flow between a service $S_i$ and a device $D_j$ of a couple ($S_i$, $D_j$) is defined by the following equation:

$$p_{ij} = \frac{(ps_i + pd_j)}{2}$$

wherein:

- $ps_i$ is the priority associated with the service $S_i$,
- $pd_j$ is the priority associated with the device $D_j$.

In a variant compliant with the present principles, a priority $p_{ij}$ can be defined by the following equation:

$$p_{ij} = C1 \times ps_i + C2 \times pd_j$$

wherein:

- $ps_i$ is the priority associated with the service $S_i$,
- $pd_j$ is the priority associated with the device $D_j$,
- C1 and C2 are two constants defined by $0 \le C1, C2 \le 1$ and $C1+C2 \le 1$.

Besides, to determine $ps_i$, it can be further assigned to each service $S_i$ of a set of n services, a vector V containing a set of K priorities assigned to a set of K features of said service Si such that:

$$Vs_i = [vs_{i0}, vs_{i1}, \cdots, vs_{ik}, \cdots, vs_{iK-1}],$$

where the priority $vs_{ik} \in \{0,1,..., 100\}$ for example. Naturally, other values can be used.

As an illustrative but non limitative example, the set of features of the service to consider can be:

- the type of service (e.g., IPTV, VOD, OTT, WEB, etc.),
- the type of stream (e.g., progressive, HAS, backup, etc.),
- the dayparting of the service (e.g.; morning, afternoon, early evening, late evening, etc.),
- the user of the service (e.g. Dad, Mom, Son, Guest, etc.),
- etc.

The priority $ps_i$ for the service $S_i$ can be obtained from the following equation:

$$ps_i = \frac{\sum vs_{ik}}{K}$$

wherein:

- K is a number of features associated with the service $S_i$
- $vs_{ik}$ is a priority associated with the service Si for a feature k amongst the K features of the service $S_i$.

The set of n priorities $ps_j$, corresponding to the n services, can be aggregated into the vector $P_s$ of dimension n.
In the following numerical example showing the computation of priorities $ps_i$ compliant with the present principles, it is considered that:

- the available services at the LAN 20 depend only on two features, such as the type of service (feature $f_0$) and the user of the service (feature $f_1$),
- the set of priorities $vs_{i0}$ assigned to the feature $f_0$ (i.e. the type of service) is IPTV = 100, VOD = 100, OTT = 50, WEB = 10;
- the set of priorities $vs_{i1}$ assigned to the feature $f_1$ (i.e. the user of the service) is Dad = 100, Mom = 100, Son = 50, Guest = 10.

In a first moment t1, it is considered that Dad is watching Netflix (VOD service So), whereas Son is playing a game in the TF1 WEB site (WEB service $S_1$). In this case, the vectors of service priorities $Vs_i$ are:

$$Vs_0 = [vs_{00}, vs_{01}] = [100, 100] \text{ then } ps_0 = 100$$

$$Vs_1 = [vs_{10}, vs_{11}] = [10, 50] \text{ then } ps_1 = 30$$

In a second moment t2, it is considered that Dad and Mom are watching together Orange IPTV (IPTV service So), whereas Son is receiving a stream from the TF1 WEB site (OTT service $S_1$). In this case, the vectors of service priorities $Vs_i$ are:

$$Vs_0 = [vs_{00}, vs_{01}] = [100, 50] \text{ then } ps_0 = 75$$

$$Vs_1 = [vs_{10}, vs_{11}] = [50, 50] \text{ then } ps_1 = 50$$

Besides, to determine $pd_j$, it can be further assigned to, each device $D_j$ of the set of m devices, a vector V containing a set of K priorities assigned to a set of K attributes of said device $D_j$ such that:

$$Vd_j = [vd_{j0}, vd_{j1}, \cdots, vd_{jk}, \cdots, vd_{jK-1}]$$

where the priority $vd_{jk} \in \{0,1,..., 100\}$ for example.
As an illustrative but non limitative example, the set of features of the devices to consider can be:

- the type of device (e.g., TV, PC, Tablet, Smartphone, etc.),
- the user of the device (e.g., Dad, Mom, Child, Guest, etc.),
- the location of the device (e.g., living room, bedroom, kitchen, games room, etc.),
- the dayparting (e.g., morning, afternoon, early evening, late evening, etc.),
- etc.

The priority $pd_j$ for the device $D_j$ can be obtained from the following equation:

$$pd_j = \frac{\sum vdj_k}{K}$$

wherein:

- K is a number of attributes associated with the device $D_j$
- $vd_{jk}$ is a priority associated with the device $D_j$ for an attribute k amongst the K attributes of the device $D_j$.

The set of m priorities $pd_j$, corresponding to the m services, can be aggregated into a vector $P_d$ of dimension m.
In the following numerical example showing the computation of priorities $pd_j$ compliant with the present principles, it is considered that:

- the available devices in LAN 20 have only three distinctive attributes, such as the type of device (attribute $a_0$), the user of the device (attribute $a_1$), and the location of the device (attribute $a_2$),
- the set of priorities $vd_{j0}$ assigned to the attribute $a_0$ (i.e. the type of device) is TV = 100, PC = 50, Tablet = 80, Game Console = 100,
- the set of priorities $vd_{j1}$ assigned to the attribute $a_1$ (i.e. the user of the device) is Dad = 100, Mom = 100, Son = 50, Guest = 50,
- the set of priorities $vd_{j2}$ assigned to the attribute $a_2$ (i.e. the location of the device) is Office = 80, Living room = 100, Kitchen = 50, Bedroom = 80.

In a first moment t1, it is considered that Dad is in the Office using his PC (device $D_0$), Mom is in the Kitchen using her Tablet (device $D_1$), and Son is in the living room playing with the Game Console (device $D_2$).). In this case, the vectors of device priorities $Vd_j$ are:

$$Vd_0 = [vd_{00}, vd_{01}, vd_{02}] = [50, 100, 80] \text{ then } pd_0 = 76$$

$$Vd_1 = [vd_{10}, vd_{11}, vd_{12}] = [50, 100, 80] \text{ then } pd_1 = 76$$

$$Vd_2 = [vd_{20}, vd_{21}, vd_{22}] = [100, 50, 100] \text{ then } pd_2 = 83$$

In a second moment t2, it is considered that Dad is in the Office using his PC (device $D_0$), Mom is in the Living room using her Tablet (device $D_1$), and Son is in his bedroom watching TV (device $D_2$). In this case, the vectors of device priorities $Vd_j$ are:

$$Vd_0 = [vd_{00}, vd_{01}, vd_{02}] = [50, 100, 80] \text{ then } pd_0 = 76$$

$$Vd_1 = [vd_{10}, vd_{11}, vd_{12}] = [80, 100, 100] \text{ then } pd_1 = 93$$

$$Vd_2 = [vd_{20}, vd_{21}, vd_{22}] = [100, 50, 80] \text{ then } pd_2 = 76$$

Besides, to determine the bandwidth $b_{ij}$ required for a downlink flow between a service $S_i$ and a device $D_j$, it can be considered that:

- $bs_i = [bs.min_i, bs.max_i]$ is the range of bitrates available from the service $S_i$. Indeed, some services $S_i$ might be available with different levels of QoS (Quality of Service). YouTube is an example where the service is available for Standard Definition and High Definition each definition requiring less or more bit-rate. HTTP Adaptive Streaming (such as HTTP Live Streaming or HLS from APPLE) is another example where the service is available for a range of QoS levels, and hence a range of bit-rates (multi bit-rate service),
- $bd_j = [bd.min_j, bd.max_j]$ is the range of bitrates supported by the device $D_j$. Some characteristics of the device $D_j$ can make useless to receive a service with a bit-rate higher than a certain value. For example, the screen resolution of a smart-phone can limit the maximum bit-rate that is suitable for a video streaming service. In addition, the CPU processing power of a low cost smart-phone can for example limit the maximum packet throughput,

- [Max (bs.min$_i$, bd.min$_j$); Min (bs.max$_i$, bd.max$_j$)] is the range of allowable bit-rates for a flow stream between the service Si and the device D$_j$.

Thus, the bandwidth b$_{ij}$ required for a downlink flow between a service S$_i$ and a device D$_j$ can be obtained from the range of allowable bit-rates [Max (bs.min$_i$, bd.min$_j$); Min (bs.max$_i$, bd.max$_j$)] based, for instance, on a bandwidth manager policy associated with the LAN 20. Some examples of the bandwidth manager policy can be:

- priority to fairness by, for instance, selecting the maximum number of flows by allocating the bandwidth Max (bs.min$_i$, bd.min$_j$) to each flow,
- priority to quality by, for instance, selecting the maximum number of flows by allocating the bandwidth Min (bs.max$_i$, bd.max$_j$) to each selected flow,
- priority to user preferences by, for instance, pick something in between the two previous policies (fairness, quality) tailored to user preferences. A user acting as a gateway administrator can for example select one or more preferences and/or bandwidth manager policies. For instance, a check box can be presented to such a user (through for instance a bandwidth management application) so that the user can choose one policy from the set of profile policies implemented in the system.

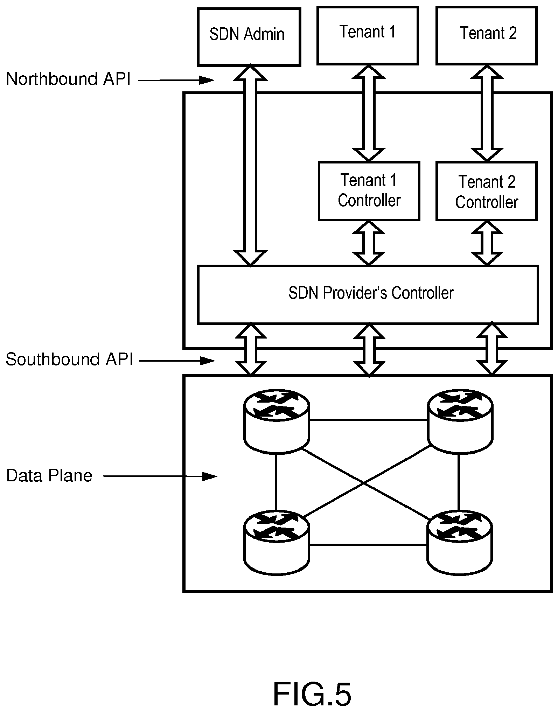

For the implementation of the present principles, the concept of Software Defined Multi-Tenant Network, as illustrated in Figure 5, can be used. The Multi-Tenancy principle (also known as Slicing) relies on sharing the network control among several administrators, among them an end user with administrator rights at home (so called HNA or Home Network Administrator), an ISP (Internet Service Provider), and other service providers.

In addition, Software Defined Networking (SDN) is a paradigm that separates the control and data planes into two specific entities to bring flexibility and programmability to the networks and to ease the management of multi-tenant networks. In a SDN environment, the network applications communicate and send their network service requests to the controller via Northbound Application Programming Interfaces (NBIs). Accordingly, the controller (HNA, ISP, Tenant 1) translates the requests into low-level forwarding rules and installs them in the data plane network apparatuses via Southbound Application Programming Interfaces (SBIs).

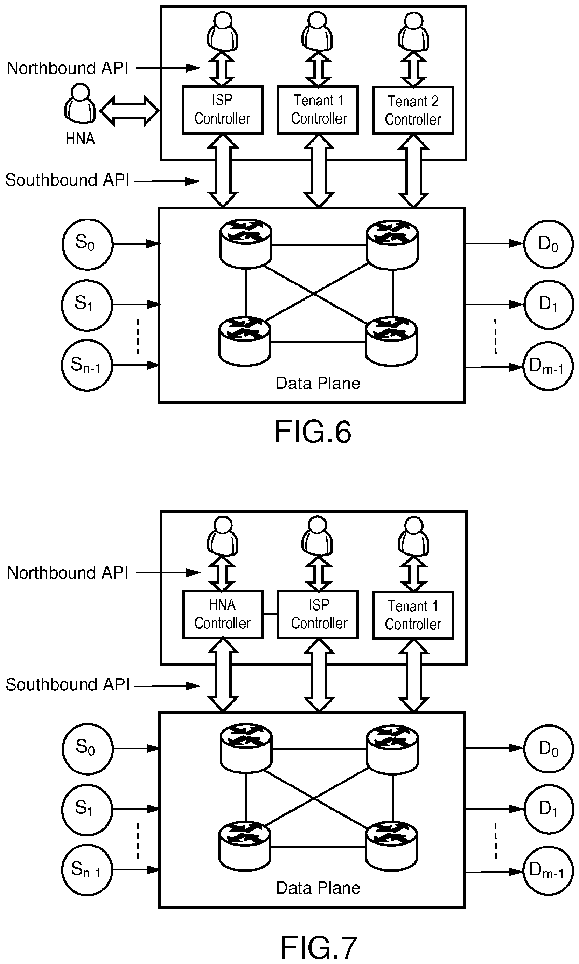

In an example compliant with the present principles shown in Figure 6, the local network 20 is considered as a multi-tenant network, wherein at least two tenants are present: the Home Network Administrator (HNA) and the Internet Service Provider (ISP). Additional tenants might be Over the Top (OTT) and Internet of Things (IoT) service providers (two additional tenants Tenant 1 and Tenant 2 are shown in Figure 6). The tenants are allowed to have higher and differentiated levels of control over the slices of the available resources. In the example, the southbound multi-tenancy architecture is implemented, wherein each tenant - except the HNA-owns his own controller and shares the common forwarding elements of the local network 20.

Since the HNA has no access to the Southbound API, the HNA communicates his preferences to the other controllers, e.g., the ISP controller, through a dedicated interface. For example, the HNA can use an application on his smart phone (or tablet, computer, etc.) to modify and configure his profile and preferences. In other words, the HNA tenant has a consultative role about the control of the slices assigned to each service the user has subscribed to but he does not have a direct control of the slices, the control of the slices is the service providers' responsibility.

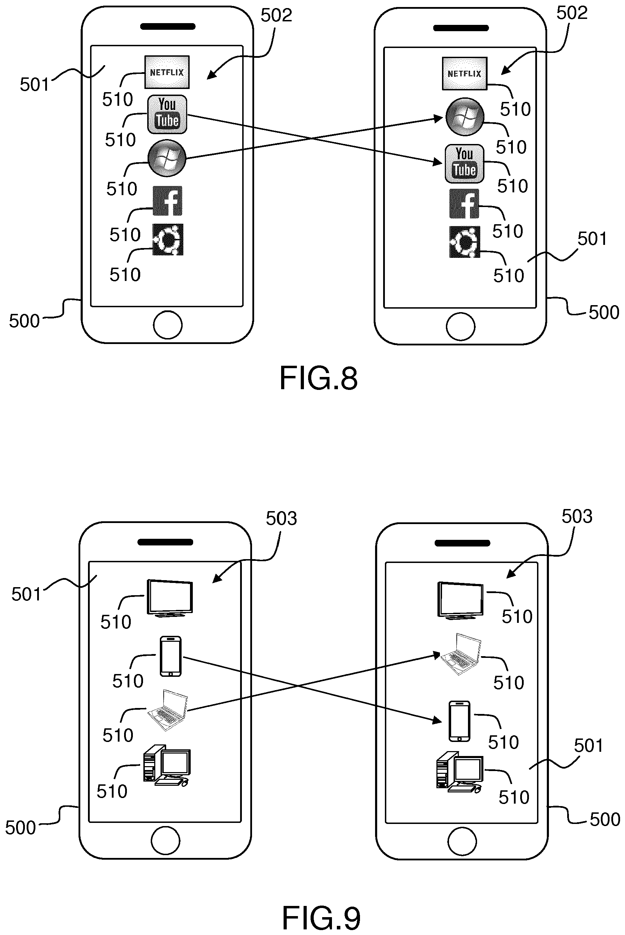

Figure 8 depicts an illustrative, but non limitative, example of implementation of the present principles on smart phone device in reference to the schematic diagram shown in Figure 6. In this example, a home network 20 is considered which comprises a gateway 100 and four devices 10 (such as a smart TV, a smart phone, a portable PC, a desktop PC). Four users (Dad, Mom, Son and Daughter) can use the four devices.

In said example, a smart-phone application 501 can be implemented on a smart-phone 500 (belonging to the home network) to display to the HNA an ordered list 502 of icons 510 arranged in column, each icon 510 representing a distinct service as shown in Figure 8. The icon (i.e. the corresponding service) at the top of the column has the highest priority and the icon (i.e. the corresponding service) at the bottom of the column has the lowest priority. The HNA has the possibility to modify the proposed order for the services by moving the icons 510 in the column, for instance by interaction with the touch screen of the smart-phone 500, as shown in Figure 8. Two services having the same priority can be arranged on a same row.

The smart-phone application can then convert the displayed ordered list of service icons into an Event-Condition-Action (ECA) policy rule, as follows:

- Event: Initialize default service priorities
- Condition: None
- Action: Netflix > Youtube > Update of Windows OS > Facebook > Update of Ubuntu OS

wherein the symbol ">" in the "Action" item means that all the services on the left of ">" have higher priority than all the services listed on its right.

In the example shown in Figure 8, "Netflix > Youtube > Update of Windows OS" means that Netflix has higher priority than Youtube and Update of Windows OS, and Youtube has higher priority than Update of Windows OS.

This ECA policy rule can be stored into a policy file that can be read by the ISP controller which needs to translate the ECA policy rule into a set of numerical priorities as previously described. The ISP controller can be embedded within the gateway 100.

Thus, when $S_0$ = Netflix, $S_1$ = Youtube, $S_2$ = Update of Windows OS, $S_3$ = Facebook, and $S_4$ = Update of Ubuntu OS, the set of services S is:

$$S = \{S_0, S_1, S_2, S_3, S_4\}.$$

For simplicity, in this example, it is considered that the priority of each service $S_i$ depends only on a single feature of the service. Therefore, the vector $Vs_i$ can be $Vs_i = [vs_{i0}]$ and $ps_i = vs_{i0}$. With an evenly distributed set of priorities Ps to the six available services, the set Ps of priorities assigned to the six available services is:

$$Ps = \{ps_0 = 100, ps_1 = 75, ps_2 = 50, ps_3 = 25, ps_4 = 0\}$$

As shown in Figure 9, the smart-phone application 501 can further to display to the HNA an ordered list 503 of icons 510 arranged in column, each icon 510 representing a distinct device 10 of the considered home network. The icon (i.e. the corresponding device) at the top of the column has the highest priority and the icon (i.e. the corresponding device) at the bottom of the column has the lowest priority. The HNA has also the ability to change the proposed order for the devices by moving the icons 510 in the column.

As for the services, the smart-phone application can convert the displayed ordered list of device icons into an ECA policy rule, as follows:

- Event: Initialize default device priorities
- Condition: None
- Action: Smart TV > Smart Phone > Portable PC > Desktop PC.

Thus, when $D_0$ = Smart TV, $D_1$ = Smart Phone, $D_2$ = Portable PC, and $D_3$ = Desktop PC, the set D of available devices is:

$$D = \{D_0, D_1, D_2, D_3\}$$

For simplicity, in this example, it is considered that the priority of each device $D_i$ depends only on a single feature of the device. Therefore, the vector $Vd_j$ is $Vd_j = [vd_{j0}]$ and $pd_j = vd_{j0}$. With an evenly distributed set of priorities Pd to the four available devices, the set Pd of priorities assigned to the four available devices is:

$$Pd = \{pd_0 = 100, pd_1 = 67, pd_2 = 34, pd_3 = 0\}$$

The right side of Figure 9 shows the update of the ordered list of priorities of the set of devices after, for instance, one HNA's interaction (e.g. thanks to the touch screen by sliding icons to a desired position in the list).

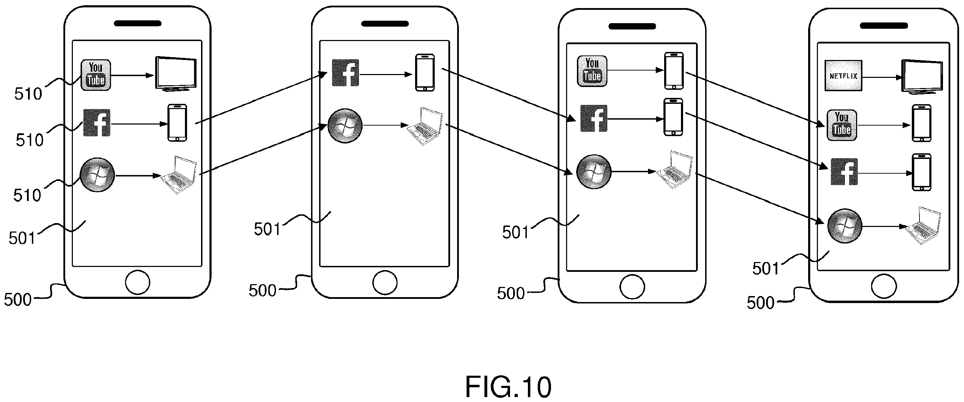

Figure 10 shows an evolution of active flows from an initial priority status (on the left side) to a final priority status (on the right side) with reference to the conditions of Figure 8.

In the initial priority status of the active flows, only Son and Daughter are at Home. Daughter is watching YouTube on the Smart TV, and at the same time browsing Facebook on her smart phone, and in the meantime, the Son's Desktop PC is receiving an Update of Windows OS.

Dad arrives at Home and wishes to watch a film from Netflix on the Smart TV. Daughter gives way the Smart TV to Dad and switches the YouTube stream to her smart phone.

In the final priority status of the active flows, Dad watches a Netflix film on the SmartTV, Daughter is watching YouTube stream on her smartphone and at the same time browsing Facebook on her smart phone, and the Son's Desktop PC is receiving an Update of Windows OS.

The sequence of events of Figure 10 can be translated by the HNA controller (which can be embedded within the gateway 100) into an ECA policy rule as follows to be handled by the ISP controller:

- Event: Add a new service-to-device flow to the active flows list
- Condition: The total bandwidth required by the new list of active flows should not exceed the available downlink bandwidth B
- Action: Activate the service-to-device flows having the highest priority, i.e. by solving the bandwidth management optimization problem previously described.

In Figure 8 to 10, it is assumed that the total bandwidth consumed by all the new active services is smaller than the available downlink bandwidth B. When this is not the case, the bandwidth manager 160 can drop (or not choose) the flow with the lowest priority (i.e. the Windows OS update in the example).

In another embodiment of the present principles, the HNA can have the possibility to modify on the fly the flow priorities of the solution produced by the bandwidth manager solving the bandwidth management optimization problem. This would mean that the sets of service and device priorities (Ps, Pd), used as input for solving the bandwidth management optimization problem, do not represent the user wishes in the present context.

In this embodiment, several solutions can be implemented:

- 1st solution: follow the user's wishes and ignore the bandwidth management optimization problem (i.e. the 0-1 Knapsack problem) until an active flow drops. When a new flow arrives, restart and solve the bandwidth management optimization problem with the saved service and device priorities (Ps, Pd);
- 2nd solution: follow the user's wishes and update the policy file (Ps, Pd) as follows:

  ▪ select the top flows selected by the user whose sum of the required bit-rates is less than B,
  ▪ assign to this new set of flows the set of priorities $p_{ij}$ of the top flows of the previous set of active flows,
  ▪ reassign the set of $ps_i$ priorities according to the new order. The reassignment of the $ps_i$ priorities can incorporate additional features to the vector $Vs_i$ such as the location of the device at home, the day and time of the emission, the identification of the user behind a device, etc.,
  ▪ determine the set of $pd_j$ priorities from:

$$p_{ij} = \frac{(ps_i + pd_j)}{2}$$

  since $p_{ij}$ and $ps_i$ are known,
  ▪ update the policy file (Ps, Pd) accordingly.

Besides, in a variant compliant with the present principles, the HNA can be allowed to have direct access to the Southbound API as shown in Figure 7. When the end user subscribes to a service, the HNA is provided by the service provider with a standard profile that the HNA can modify. The standard profile corresponds to an average user and it contains the priority settings previously described. Before granting an access to the Southbound API to the HNA controller, the ISP controller needs to verify that the HNA settings are valid. Therefore, interaction between the HNA and ISP controllers can be required.

In a further variant compliant with the present principles, the HNA can get access to the Southbound API through the ISP controller. The difference with the previous variant is that the HNA has access only to the settings of the services provided by the ISP and has no direct access to the settings of the services provided by the other tenants.

Thus, thanks to the present principles, the bandwidth management method 300 can allow to activate the maximum number of flows, taking into account the set of flow priorities (for instance given by a user or by an operator), knowing that the sum of the bandwidths of the active flows needs to be lower than the available downlink bandwidth B.

In the Figures, it is to be appreciated that the illustrated blocks or modules can correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method to be implemented at a network element adapted to be connected to a communication network (20) comprising a set of devices ($D_0$, $D_1$, $D_j$), said devices being configured to receive one set of available services (So, $S_1$, $S_i$), wherein said method comprises:

   - obtaining (301), for couples defined by a service of the set of services (So, $S_1$, $S_i$) and a device of the set of devices ($D_0$, $D_1$, $D_j$), a bandwidth ($b_{00}$, $b_{11}$, $b_{ij}$) for each flow between the service and the device of said couples;
   - obtaining (302) a priority ($p_{00}$, $p_{11}$, $p_{ij}$) for the flows to be delivered between the services and the devices of said couples;
   - solving (303) a 0-1 Knapsack problem by applying the obtained bandwidths ($b_{00}$, $b_{11}$, $b_{ij}$) and priorities ($p_{00}$, $p_{11}$, $p_{ij}$) and by considering an available downlink bandwidth associated with said communication network (20), to identify one or more allowable flows to be delivered between services of the set of services and devices of the set of devices;
   - allowing (304) the identified one or more allowable flows to be delivered to the corresponding devices of said communication network (20).

2. Method according to claim 1, wherein a bandwidth ($b_{00}$, $b_{11}$, $b_{ij}$) for a flow associated with one of said couples is obtained from a range of allowable bit-rates for said flow between the service and the device of said couple.

3. Method according to claim 2, wherein the range of allowable bit-rates for said flow between the service and the device of said couple is defined by the range [Max ($bs.min_i$, $bd.min_j$); Min ($bs.max_i$, $bd.max_j$)], wherein:

   - [$bs.min_i$, $bs.max_i$] is the range of bitrates available from the service $S_i$ of said couple ($S_i$, $D_j$)
   - [$bd.min_j$, $bd.max_j$] is the range of bitrates supported by the device $D_j$ of said couple ($S_i$, $D_j$).

4. Method according to claim 3, wherein the bandwidth ($b_{00}$, $b_{11}$, $b_{ij}$) for a flow associated with one of said couples, obtained from the range [Max ($bs.min_i$, $bd.min_j$); Min ($bs.max_i$, $bd.max_j$)], depends on a bandwidth manager policy associated with said communication network (20).

5. Method according to claim 4, wherein said bandwidth manager policy associated with said communication network (20) belongs to the following group of policies comprising:

   - priority to fairness;
   - priority to quality;
   - priority to user preferences.

**6.** Method according to claims 1 to 5, wherein allowing the identified one or more allowable flows is performed periodically.

**7.** Method according to claims 1 to 6, wherein allowing the identified one or more allowable flows is performed based on a network event.

**8.** Method according to claims 1 to 8, wherein a priority ($p_{00}$, $p_{11}$, $p_{ij}$) for a flow between the service ($S_i$) and the device ($D_j$) of said couples is defined by:

$$p_{ij} = C1 \times ps_i + C2 \times pd_j$$

where:

- $ps_i$ is the priority associated with the service $S_i$
- $pd_j$ is the priority associated with the device $D_j$
- C1 and C2 are two constants defined by $0 \leq C1, C2 \leq 1$ and $C1+C2 \leq 1$.

**9.** Network element to be connected to a communication network (20) comprising a set of devices ($D_0$, $D_1$, $D_j$), said devices being configured to receive one set of available services ($S_0$, $S_1$, Si), wherein said network element (100) comprises at least one memory (130) and one or more processors (140) configured to:

- obtain, for couples defined by a service of the set of services ($S_0$, $S_1$, $S_i$) and a device of the set of devices ($D_0$, $D_1$, $D_j$), a bandwidth (boo, $b_{11}$, $b_{ij}$) for each flow between the service and the device of said couples;
- obtain a priority ($p_{00}$, $p_{11}$, $p_{ij}$) for the flows to be delivered between the services and the devices of said couples;
- solve a 0-1 Knapsack problem by applying the obtained bandwiths ($b_{00}$, $b_{11}$, $b_{ij}$) for and priorities ($p_{00}$, $p_{11}$, $p_{ij}$) and by considering an available downlink bandwidth associated with said communication network (20), to identify one or more allowable flows to be delivered between services of the set of services ($S_0$, $S_1$, $S_i$) and devices of the set of devices ($D_0$, $D_1$, $D_j$);
- allow the identified one or more allowable flows to be delivered to the corresponding devices ($D_0$, $D_1$, $D_j$) of said communication network (20).

**10.** Network element adapted to be connected to a communication network (20) comprising a set of devices ($D_0$, $D_1$, $D_j$), said devices being configured to receive one set of available services ($S_0$, $S_1$, $S_i$), wherein the network element is a bandwidth manager (160) configured to:

- obtain, for couples defined by a service of the set of services ($S_0$, $S_1$, $S_i$) and a device of the set of devices ($D_0$, $D_1$, $D_j$), a bandwidth ($b_{00}$, $b_{11}$, $b_{ij}$) for each flow between the service and the device of said couples;
- obtain a priority ($p_{00}$, $p_{11}$, $p_{ij}$) for the flows to be delivered between the services and the devices of said couples;
- solve a 0-1 Knapsack problem by applying the obtained bandwidths ($b_{00}$, $b_{11}$, $b_{ij}$) and priorities ($p_{00}$, $p_{11}$, $p_{ij}$) and by considering an available downlink bandwidth associated with said communication network (20), to identify one or more allowable flows to be delivered between services of the set of services ($S_0$, $S_1$, $S_i$) and devices of the set of devices ($D_0$, $D_1$, $D_j$);
- allow the identified one or more allowable flows to be delivered to the corresponding devices of said communication network (20).

**11.** Network element according to claim 10, wherein a bandwidth for a flow associated with one of said couples is obtained from a range of allowable bit-rates for said flow between the service and the device of said couple.

**12.** Network element according to claim 11, wherein the range of allowable bit-rates for said flow between the service and the device of said couple ($S_i$, $D_j$) is defined by the range [Max (bs.min$_i$, bd.min$_j$); Min (bs.max$_i$, bd.max$_j$)], wherein:

- [bs.min$_i$, bs.max$_i$] is the range of bitrates available from the service $S_i$ of said couple ($S_i$, $D_j$)
- [bd.min$_j$, bd.max$_j$] is the range of bitrates supported by the device $D_j$ of said couple ($S_i$, $D_j$).

**13.** Network element according to claim 12, wherein the bandwidth ($b_{00}$, $b_{11}$, $b_{ij}$) for a flow associated with one of said couples, obtained from the range [Max (bs.min$_i$, bd.min$_j$); Min (bs.max$_i$, bd.max$_j$)], depends on a bandwidth manager policy associated with said communication network.

14. Network element according to claim 13, wherein said bandwidth manager policy associated with said communication network belongs to the following group of policies comprising:

- priority to fairness;
- priority to quality;
- priority to user preferences.

15. Network element according to claims 10 to 14, arranged in a gateway (100).

FIG.1

FIG.2

300

| Obtaining, for couples ($S_i$, $D_j$) defined by a service $S_i$ of a set of services and a device $D_j$ of a set of devices, a bandwidth for each flow between the service and the device of said couples | 301 |

| Obtaining a priority for the flows to be delivered between the services and the devices of said couples | 302 |

| Solving a 0-1 Knapsack problem by applying the obtained bandwidths and priorities and by considering the available downlink bandwidth of said communication network, to identify allowable flows to be delivered between services of the set of services and devices of the set of devices | 303 |

| Allowing the identified one or more allowable flows to be delivered to the corresponding devices of the communication network | 304 |

## FIG.3

## FIG.4

Northbound API

SDN Admin | Tenant 1 | Tenant 2

Tenant 1 Controller | Tenant 2 Controller

SDN Provider's Controller

Southbound API

Data Plane

FIG.5

FIG.6

FIG.7

FIG.8

FIG.9

FIG.10

Europäisches Patentamt
European Patent Office
Office européen des brevets

# EUROPEAN SEARCH REPORT

Application Number

EP 17 30 5376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 323 314 A1 (THOMSON TELECOM BELGIUM [BE]) 18 May 2011 (2011-05-18) | 1-7,9-15 | INV. H04L12/911 H04L12/927 H04N21/24 |
| A | * paragraph [0012] - paragraph [0013] * * paragraph [0019] * * paragraph [0020] - paragraph [0021]; claim 1 * | 8 | |
| A | EP 2 879 339 A1 (THOMSON LICENSING [FR]) 3 June 2015 (2015-06-03) * paragraph [0010] - paragraph [0028] * ----- | 1-15 | |
| A | WO 02/087153 A2 (NEWMIC FOUNDATION [CA]; MANNING ERIC G [CA]; WATSON ROBERT KRISTIAN [C) 31 October 2002 (2002-10-31) * page 4, line 31 - page 5, line 20 * ----- | 1-15 | |

TECHNICAL FIELDS SEARCHED (IPC)

H04L
H04N

The present search report has been drawn up for all claims

| Place of search | Date of completion of the search | Examiner |
|---|---|---|
| The Hague | 4 October 2017 | Gregori, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5376

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2017

| Patent document cited in search report | | Publication date | Patent family member(s) | | Publication date |
|---|---|---|---|---|---|
| EP 2323314 | A1 | 18-05-2011 | NONE | | |
| EP 2879339 | A1 | 03-06-2015 | CN | 105765925 A | 13-07-2016 |
| | | | EP | 2879339 A1 | 03-06-2015 |
| | | | EP | 3075114 A1 | 05-10-2016 |
| | | | JP | 2017504995 A | 09-02-2017 |
| | | | KR | 20160086854 A | 20-07-2016 |
| | | | TW | 201521394 A | 01-06-2015 |
| | | | US | 2017171103 A1 | 15-06-2017 |
| | | | WO | 2015078658 A1 | 04-06-2015 |
| WO 02087153 | A2 | 31-10-2002 | AU | 2002247589 A1 | 05-11-2002 |
| | | | CA | 2344738 A1 | 20-10-2002 |
| | | | WO | 02087153 A2 | 31-10-2002 |

EPO FORM P0459

For more details about this annex : see Official Journal of the European Patent Office, No. 12/82